# EUROPEAN PATENT APPLICATION

(11) **EP 4 407 363 A1**
(43) Date of publication of application: **31.07.2024**
(21) Application number: 22878818.8
(22) Date of filing: 30.09.2022
(51) Int. Cl.: G02B 27/01, G02B 27/42

(54) **DISPLAY DEVICE**

(30) Priority: 05.10.2021 KR 20210131868
(71) Applicant: LG Chem, Ltd., Yeongdeungpo-gu Seoul 07336 (KR)
(72) Inventor: SHIN, Bu Gon, Daejeon 34122 (KR); KIM, Jae Jin, Daejeon 34122 (KR); HWANG, Hye Won, Daejeon 34122 (KR); LEE, Joon Young, Daejeon 34122 (KR)
(74) Representative: Hoffmann Eitle
(86) International application number: PCT/KR2022/014737
(87) International publication number: WO 2023/058997

(57) **Abstract**

The present disclosure provides a display apparatus. The display apparatus includes a light source; a compensating diffraction optical element which reflects a light incident from the light source; and an off-axis reflection diffraction optical element which reflects a light reflected from the compensating diffraction optical element to the outside, wherein the compensating diffraction optical element reflects the light incident from the light source toward the off-axis reflection diffraction optical element while adjusting the reflection angle of the light incident from the light source so as to compensate for the reflection angle distortion of the light reflected from the off-axis reflection diffraction optical element.

## Description

### [Technical Field]

The present disclosure claims the benefit of the filing date of Korean Patent Application No. 10-2021-0131868 filed to the Korean Intellectual Property Office on October 05, 2021, the contents of which are hereby incorporated by reference in their entirety.

The present disclosure relates to a display apparatus. Specifically, the present disclosure relates to a display apparatus capable of compensating for chromatic dispersion and reflection angle distortion by the configuration including an off-axis reflection diffraction optical element and a compensating diffraction optical element.

### [Background Art]

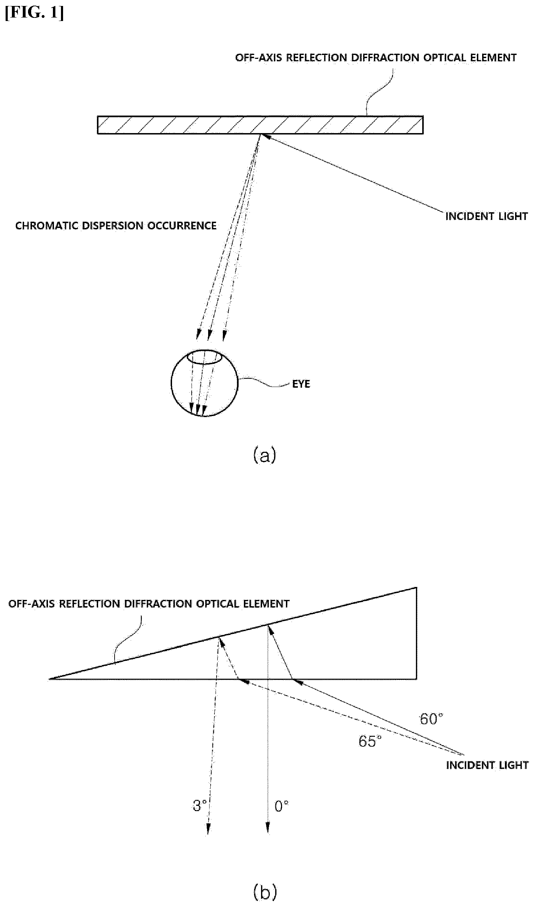

FIG. 1 shows an example of an off-axis reflection diffraction optical element (DOE) used for displaying an augmented reality image. FIG. 1(a) is a diagram for explaining chromatic dispersion occurring in an off-axis reflection diffraction optical element, and FIG. 1(b) is a diagram for explaining a reflection angle distortion phenomenon occurring in an off-axis reflection diffraction optical element.

As shown in of FIG. 1(a), when incident light incident from a light source (e.g., a display panel) is reflected by the off-axis reflection diffraction optical element, its refractive index and transmittance differ depending on its wavelength, so chromatic dispersion (broken line arrow, one-dot chain line arrow, and two-dot chain line arrow) may occur.

In addition, as shown in FIG. 1(b), when the incident light is reflected by the off-axis reflection diffraction optical element, a reflection angle distortion phenomenon in which an angle difference of incident light (a difference of 5 degrees) and an angle difference of reflected light (difference of 3 degrees) are different from each other may occur.

When a display panel with a wide wavelength linewidth, such as a liquid crystal display (LCD) panel or an organic light emitting diode (OLED) panel, is used as a light source, image sharpness may be lowered due to chromatic dispersion and reflection angle distortion.

In order to solve the chromatic dispersion problem, a method of using an expensive monochromatic light source such as a laser beam scanner (LBS) may be considered, but the LBS has a disadvantage in that an image viewing area (eye box) is very narrow.

### [Summary of Invention]

### [Technical Problem]

An object of the present disclosure is to provide a display apparatus capable of solving the reflection angle distortion and chromatic dispersion problems of an off-axis reflection diffraction optical element.

However, the objects to be addressed by the present disclosure are not limited to the above-mentioned problems, and problems other than mentioned above will be clearly appreciated by those skilled in the art from the following description.

### [Solution to Problem]

An aspect of the present disclosure provides a display apparatus which includes a light source; a compensating diffraction optical element which reflects a light incident from the light source; and an off-axis reflection diffraction optical element which reflects a light reflected from the compensating diffraction optical element to the outside, wherein the light reflected from the off-axis reflection diffraction optical element travels in a direction parallel to a traveling direction of the light incident from the light source.

According to an embodiment of the present disclosure, the light source is a liquid crystal display (LCD) panel or an organic light emitting diode (OLED) panel.

According to an embodiment of the present disclosure, the light reflected from the off-axis reflection diffraction optical element is in a same direction as the traveling direction of the light incident from the light source.

According to an embodiment of the present disclosure, an angle difference of the light incident to the off-axis reflection diffraction optical element is different from an angle difference of the light reflected from the off-axis reflection diffraction optical element, and the compensating diffraction optical element compensates so that the angle difference of the light reflected from the off-axis reflection diffraction optical element is equal to an angle difference of the light incident to the compensating diffraction optical element.

According to an embodiment of the present disclosure, an angle of the light reflected from the off-axis reflection diffraction optical element differ depending on a wavelength of the light incident to the off-axis reflection diffraction optical element, and the compensating diffraction optical element compensates so that the angle of the light reflected from the off-axis reflection diffraction optical element is equal to an angle of the light incident to the compensating diffraction optical element.

### [Advantageous Effects]

The display apparatus according to an embodiment of the present disclosure has an effect of correcting or compensating for reflection angle distortion and chromatic dispersion, thereby improving image sharpness.

In addition, since the display apparatus according to an embodiment of the present disclosure compensates for reflection angle distortion and chromatic dispersion, a display panel, such as, an LCD panel or an OLED panel, having a wide wavelength linewidth and generally used and a wide directivity angle can be used as a light source, so that wide versatility and a wide eye box can be realized.

Effects of the present disclosure are not limited to the above-described effects, but effects other than described above will be clearly appreciated by those skilled in the art from the present specification and accompanying drawings.

### [Brief Description of Drawings]

FIG. 1 is a diagram for explaining chromatic dispersion and reflection angle distortion occurring in an off-axis reflection diffraction optical element.
FIG. 2 is a diagram for explaining an example of the display apparatus of the present disclosure which compensates for reflection angle distortion.
FIG. 3 is a diagram for explaining an example of the display apparatus of the present disclosure which compensates for chromatic dispersion.
FIG. 4 is a view for explaining an example of a comparative experiment on the effect of the display apparatus of the present disclosure on the improvement of the sharpness of an image.

### [Description of Embodiments]

When a part "comprises" or "includes" a component, it means not that the part excludes other component, but instead that the part may further include other component unless expressly stated to the contrary.

Throughout the specification, when a member is described as being located "on" another member, this includes not only a case in which the member is in contact with the other member but also a case in which another member exists between the two members.

Throughout this specification, the phrase "A and/or B" refers to "A and B, or A orB."

A display apparatus 200 of the present disclosure is configured by including a compensating diffraction optical element 220, and thus corresponds to an appratus capable of compensating for light reflection angle distortion and light chromatic dispersion.

The compensating diffraction optical element 220 reflects the light incident from the light source 210 to an off-axis reflection diffraction optical element 230, and the off-axis reflection diffraction optical element 230 reflects the light reflected from the compensating diffraction optical element 220 again to the outside.

The compensating diffraction optical element 220 reflects the light so that the traveling direction of the light reflected from the off-axis reflection diffraction optical element 230 is parallel to the traveling direction of the light incident from the light source. By this function of the compensating diffraction optical element 220, the light reflection angle distortion and the light chromatic dispersion may be compensated.

Hereinafter, the configuration of the display apparatus 200 will be described in more detail.

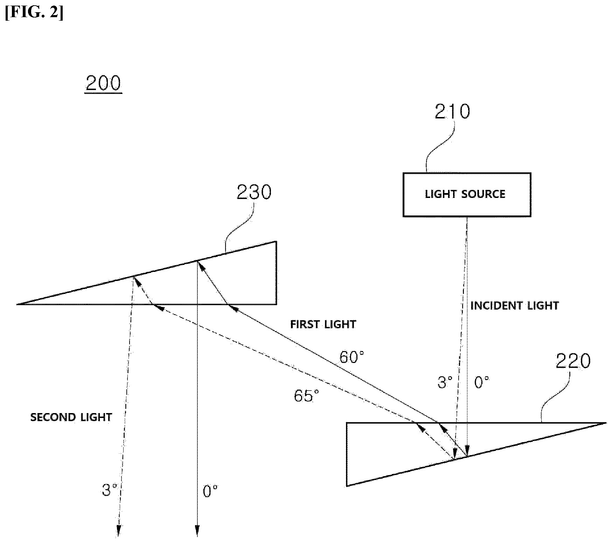

FIG. 2 is a diagram for explaining an example of the display apparatus 200 of the present disclosure which compensates for reflection angle distortion. As shown in FIG. 2, the display apparatus 200 may be configured by including a light source 210, a compensating diffraction optical element 220, and an off-axis reflection diffraction optical element 230.

The light source 210 may irradiate light to the compensating diffraction optical element 220. Hereinafter, the light irradiated (incident) from the light source 210 to the compensating diffraction optical element 220 will be referred to as 'incident light'.

The light source 210 may be implemented as a display panel having a wide wavelength linewidth, generally used, and a wide directivity angle, such as a liquid crystal display (LCD) panel or an organic light emitting diode (OLED) panel. In this case, the display apparatus 200 can realize wide versatility and a wide eye box.

The compensating diffraction optical element 220 may reflect the incident light in the direction of the off-axis reflection diffraction optical element 230. Hereinafter, the light incident from the compensating diffraction optical element 220 to the off-axis reflection diffraction optical element 230 will be referred to as a 'first light'.

The off-axis reflection diffraction optical element 230 may reflect the incident light (i.e., the first light) reflected from the compensating diffraction optical element 220 to the outside. Hereinafter, the light reflected from the off-axis reflection diffraction optical element 230 and directed to the outside will be referred to as a 'second light'. The direction in which the second light travels, that is, the outside, may be a direction in which the pupil of the observer is located.

The compensating diffraction optical element 220 may adjust the reflection angle of the first light. The adjustment of the reflection angle by the compensating diffraction optical element 220 is to compensate for the reflection angle distortion occurring in the off-axis reflection diffraction optical element 230.

In the example of FIG. 2, the incident light having an angle difference of 3 degrees (0 degree to 3 degrees) is reflected as the first light having a reflection angle difference of 5 degrees (60 degrees to 65 degrees) by the reflection angle adjustment of the compensating diffraction optical element 220, and then, is reflected again as the second light having a reflection angle difference of 3 degrees (0 degree to 3 degrees) by the reflection of the off-axis reflection diffraction optical element 230.

As a result, the angle difference of the incident light and the angle difference of the second light become the same by adjusting the reflection angle of the compensating diffraction optical element 220, so that the reflection angle distortion which occurs when being configured with only the off-axis reflection diffraction optical element 230 is compensated or corrected.

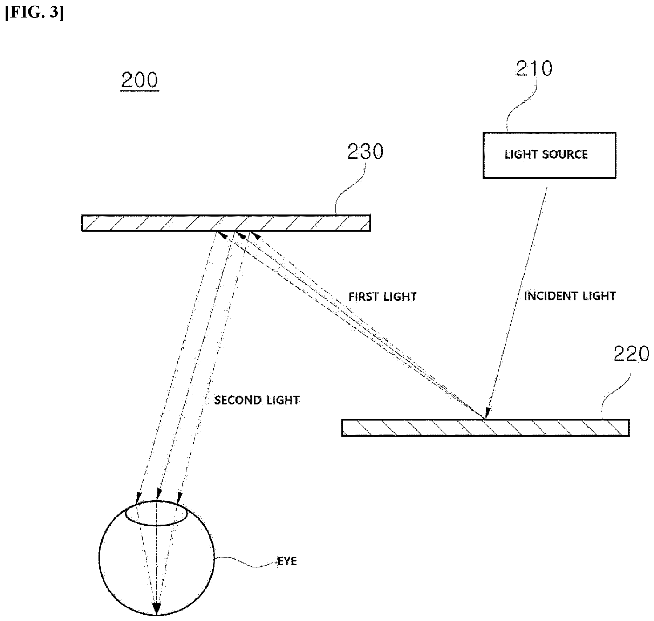

FIG. 3 is a diagram for explaining an example of the display apparatus 200 of the present disclosure which compensates for chromatic dispersion. As shown in FIG. 3, the display apparatus 200 may be configured by including a light source 210, a compensating diffraction optical element 220, and an off-axis reflection diffraction optical element 230.

The light source 210 may irradiate light (incident light) to the compensating diffraction optical element 220. The light source 210 may be implemented as a display panel such as an LCD panel or an OLED panel, and in this case, the display apparatus 200 can realize wide versatility and a wide eye box.

The compensating diffraction optical element 220 may reflect the incident light to make the first light incident in the direction of the off-axis reflection diffraction optical element 230. The off-axis reflection diffraction optical element 230 may reflect the first light to make the second light travel to the outside. The direction in which the second light travels, that is, the outside, may be a direction in which the pupil of the observer is located.

The compensating diffraction optical element 220 may adjust the chromatic dispersion of the first light. The adjustment of the chromatic dispersion by the compensating diffraction optical element 220 is to compensate for the chromatic dispersion occurring in the off-axis reflection diffraction optical element 230.

In the example of FIG. 3, the incident light may be reflected as the first light which includes lights of different wavelengths (e.g., red, green, and blue) emitted at different angles by the chromatic dispersion adjustment of the compensating diffraction optical element 220. Thereafter, the first light may be reflected as the second light which includes lights of different wavelengths emitted at the same angle (parallel) by reflection (color dispersion) at the off-axis reflection diffraction optical element 230.

As a result, the second light propagates in parallel by the chromatic dispersion adjustment of the compensating diffraction optical element 220, and the dispersion-compensated light is incident to the pupil of the observer, so that the chromatic dispersion which occurs when being configured with only the off-axis reflection diffraction optical element 230 is compensated or corrected.

In the above, the embodiment in which the display apparatus 200 compensates for the chromatic dispersion of light and the embodiment in which the reflection angle distortion of light are separately described, and however, the display apparatus 200 may be configured to simultaneously implement both embodiments. That is, the display apparatus 200 may be configured by including the compensating diffraction optical element 220, thereby compensating for the reflection angle distortion of light as well as compensating for the chromatic dispersion of light.

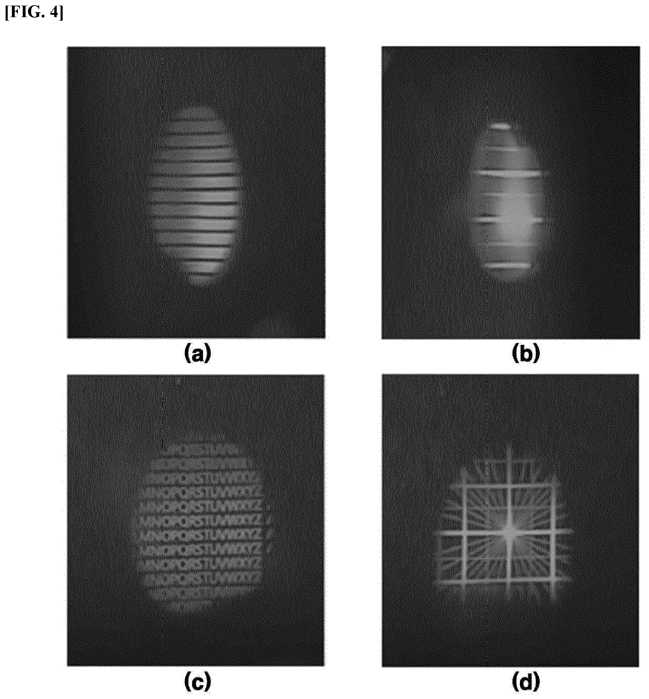

FIG. 4 is a view for explaining an example of a comparative experiment on the effect of the display apparatus 200 on the improvement of the sharpness of an image.

FIGS. 4(a) and 4(b) show the sharpnesses of images by a conventional display apparatus that does not include a compensating diffraction optical element (including only an off-axis reflection diffraction optical element), while FIGS. 4(c) and 4(d) show the sharpnesses of images by the display apparatus 200 of the present disclosure including the compensating diffraction optical element.

Referring to FIGS. 4(a) and 4(b), the conventional display apparatus does not compensate for the reflection angle distortion and the chromatic dispersion of light generated by the off-axis reflection diffraction optical element, so it can be seen that the sharpnesses of the images are relatively lowered.

Referring to FIGS. 4(c) and 4(d), the display apparatus 200 of the present disclosure compensates for at least one of the reflection angle distortion and chromatic dispersion of light generated by the off-axis reflection diffraction optical element, so that it can be seen that the sharpnesses of the images becomes relatively high.

In the above, the present disclosure has been described in detail with reference to various embodiments. However, embodiments according to the present disclosure may be modified in other various forms. That is, the embodiments of the present specification are provided to more completely explain the present disclosure to those of ordinary skill in the art to which the present disclosure belongs.

The present disclosure is not limited to the embodiments described herein, and various modifications can be made by those skilled in the art to which the present disclosure belongs within the equivalent scope of the technical idea of the present disclosure and the claims to be provided below.

### [Reference Sign List]

- 200:: Display apparatus
- 220:: Compensating diffraction optical element
- 230:: Off-axis reflection diffraction optical element

## Claims

1. A display apparatus comprising:
a light source;
a compensating diffraction optical element which reflects a light incident from the light source; and
an off-axis reflection diffraction optical element which reflects a light reflected from the compensating diffraction optical element to the outside,
wherein the light reflected from the off-axis reflection diffraction optical element travels in a direction parallel to a traveling direction of the light incident from the light source.

2. The display apparatus of claim 1, wherein the light source is a liquid crystal display panel or an organic light emitting diode panel.

3. The display apparatus of claim 1, wherein the light reflected from the off-axis reflection diffraction optical element is in a same direction as the traveling direction of the light incident from the light source.

4. The display apparatus of claim 1, wherein an angle difference of the light incident to the off-axis reflection diffraction optical element is different from an angle difference of the light reflected from the off-axis reflection diffraction optical element, and
wherein the compensating diffraction optical element compensates so that the angle difference of the light reflected from the off-axis reflection diffraction optical element is equal to an angle difference of the light incident to the compensating diffraction optical element.

5. The display apparatus of claim 1, wherein an angle of the light reflected from the off-axis reflection diffraction optical element differ depending on a wavelength of the light incident to the off-axis reflection diffraction optical element, and
wherein the compensating diffraction optical element compensates so that the angle of the light reflected from the off-axis reflection diffraction optical element is equal to an angle of the light incident to the compensating diffraction optical element.
